Europäisches Patentamt

European Patent Office

Office européen des brevets

(11) Veröffentlichungsnummer: **0 326 932**

**A2**

(12) # EUROPÄISCHE PATENTANMELDUNG

(21) Anmeldenummer: 89101308.8

(51) Int. Cl.⁴: **G11B 11/10**

(22) Anmeldetag: 26.01.89

(30) Priorität: 02.02.88 DE 3802999

(43) Veröffentlichungstag der Anmeldung:
09.08.89 Patentblatt 89/32

(84) Benannte Vertragsstaaten:
**DE FR GB NL**

(71) Anmelder: **BASF Aktiengesellschaft
Carl-Bosch-Strasse 38
D-6700 Ludwigshafen(DE)**

(72) Erfinder: **Steininger, Helmut, Dr.
Dr.-Ernst-Kilb-Weg 15
D-6520 Worms 26(DE)**

(54) **Flächenförmiges, mehrschichtiges magneto-optisches Aufzeichnungsmaterial.**

(57) Die Erfindung betrifft ein flächenförmiges, mehrschichtiges magneto-optisches Aufzeichnungsmaterial mit

(A) einem optisch transparenten dimensionsstabilen Träger,

(B) einer thermisch veränderbaren Aufzeichnungsschicht aus einer amorphen Lanthanid-Übergangsmetall-Legierung und - zumindest auf der dem Träger (A) abgewandten Seite der Aufzeichnungsschicht (B) - mit

(C) einer polykristallinen oder röntgenamorphen Schicht aus der Carbid-, Oxid- und/oder Nitridkeramik, welche von der Elementzusammensetzung I

$(Al_xSi_{1-x})_{1-z} (M_r^1 M_s^2 M_t^3)_z$        I

gebildet wird, worin die Indices und die Variablen die folgende Bedeutung haben:

$M^1$, $M^2$ und $M^3$        Ti, Zr, Hf, Th, Sc, Y, La, Ce, Pr, Nd, Sm, Eu, Gd, Tb, Dy, Ho, Er, Tm, Yb, Lu, V, Nb, Ta, Cr, Mo, W, Mn, Re, Fe, Co, Rh, Cu, Zn, Mg, Ca, Sr, Ba, B, Ga, In, Tl, Ge, Sn, Pb, P, As, Sb und Te, mit den Maßgaben, daß $M^1$, $M^2$ und $M^3$ voneinander verschieden sind, oder daß sie gleich oder verschieden voneinander sind, wenn es sich bei $M^1$, $M^2$ und $M^3$ um Lanthan oder ein Lanthanid handelt;
handelt;

x        0 bis 1;

z        $r + s + t$;

r        0,005 bis 0,15;

s        0,005 bis 0,15;

t        0 bis 0,005.

EP 0 326 932 A2

EP 0 326 932 A2

## Flächenförmiges, mehrschichtiges magneto-optisches Aufzeichnungsmaterial

Die vorliegende Erfindung betrifft ein flächenförmiges, mehrschichtiges magneto-optisches Aufzeichnungsmaterial mit
(A) einem optisch transparenten dimensionsstabilen Träger,
(B) einer thermisch veränderbaren Aufzeichnungsschicht aus einer amorphen Lanthanid-Übergangsmetall-Legierung und - zumindest auf der dem Träger (A) abgewandten Seite der Aufzeichnungsschicht (B) - mit
(C) einer polykristallinen oder röntgenamorphen Schicht aus der Carbid-, Oxid- und/oder Nitridkeramik, welche von der Elementzusammensetzung I

$$(Al_xSi_{1-x})_{1-z} (M_r^1M_s^2M_t^3)_z \qquad I$$

gebildet wird, worin die Indices und die Variablen die folgende Bedeutung haben:

$M^1$, $M^2$ und $M^3$     Ti, Zr, Hf, Th, Sc, Y, La, Ce, Pr, Nd, Sm, Eu, Gd, Tb, Dy, Ho, Er, Tm, Yb, Lu, V, Nb, Ta, Cr, Mo, W, Mn, Re, Fe, Co, Rh, Cu, Zn, Mg, Ca, Sr, Ba, B, Ga, In, Tl, Ge, Sn, Pb, P, As, Sb und Te, mit den Maßgaben, daß $M^1$, $M^2$ und $M^3$ voneinander verschieden sind, oder daß sie gleich oder verschieden voneinander sind, wenn es sich bei $M^1$, $M^2$ und $M^3$ um Lanthan oder ein Lanthanid handelt;

x     0 bis 1;

z     r + s + t;

r     0,005 bis 0,15;

s     0,005 bis 0,15;

t     0 bis 0,005.

Ein Aufzeichnungsmaterial ähnlicher Art ist aus der DE-A-33 35 689 bekannt. Darin ist die Aufzeichnungsschicht (B) 20 bis 100 nm dick. Auf ihrer dem Träger abgewandten Seite liegen drei Schichten auf, von denen jede einzelne eine definierte Funktion erfüllt. So besteht die erste Schicht aus einem Material mit hohem Brechungsindex von 2,0 und mehr, wie etwa Titan-, Cer-, Antimon-, Wolfram-, Silicium-, Wismut- oder Cadmiumoxid, und dient als Interferenzschicht. Die zweite Schicht besteht aus Metallen wie Kupfer, Silber, Chrom, Aluminium, Rhodium, Gold oder Nickel und stellt eine Reflektionsschicht dar. Die oberste Schicht wird als Antioxidationsschicht bezeichnet und besteht aus Magnesium-, Aluminium-, Silicium-, Titan- oder Thoriumoxid.

Einen vergleichbaren Aufbau weist das aus der DE-A-35 34 571 bekannte Aufzeichnungsmaterial auf. Hierbei besteht die erste der auf der Aufzeichnungsschicht (B) aufgebrachten Schichten aus einem Gemisch aus Siliciumcarbid und -nitrid oder Siliciumcarbid und Aluminiumnitrid und sie dient sowohl als Schutzschicht als auch als Interferenzschicht. Als zweite Schicht kommt eine reflektierende Schicht aus einem Metall wie Kupfer, Aluminium oder Gold in Betracht. Darüber kann eine Antikorrosionsschicht angeordnet sein. Das Aufzeichnungsmaterial kann weitere Hilfsschichten wie eine Interferenzschicht aus Siliciummonoxid, Magnesiumfluorid oder Niob-, Tantal- oder Aluminiumoxid oder Aluminium- oder Siliciumnitrid enthalten.

Des weiteren ist aus der DE-A-35 00 314 ein Aufzeichnungsmaterial mit einer sowohl als Antikorrosionsschicht als auch als Interferenzschicht dienenden Schicht aus einem Oxid-Nitrid-Gemisch bekannt.

Diese bekannten Aufzeichnungsmaterialien dienen dem Schreiben von Daten mit Hilfe impulsmodulierter Laserstrahlen, welche auf die Aufzeichnungsschichten (B) fokussiert sind und/oder senkrecht auf diese auftreffen.

Beim Schreiben von Daten wird an die Aufzeichnungsmaterialien ein magnetisches Hilfsfeld angelegt, dessen Feldlinien senkrecht zur Oberfläche der Aufzeichnungsschichten (B) ausgerichtet sind, oder aber die Aufzeichnungsschichten (B) weisen ein entsprechend ausgerichtetes, schichtimmanentes (intrinsisches) Magentfeld auf.

Bekanntermaßen werden die aus amorphen ferrimagnetischen Lanthanid-Übergangsmetall-Legierungen bestehenden, senkrecht zu ihrer Oberfläche magnetisierten Aufzeichnungsschichten (B) beim Einschreiben der Daten durch den Laserstrahl in der Auftreffstelle erwärmt. Durch die Erwärmung nimmt die Koerzitivfeldstärke $H_c$ der Legierungen ab. Unterschreitet die Koerzitivfeldstärke $H_c$ bei einer von der jeweils verwendeten Legierung abhängigen kritischen Temperatur die Feldstärke des anliegenden (externen) magnetischen Hilfsfeldes oder des schichtimmanenten, d.h. intrinsischen Magnetfeldes, so entsteht in der Auftreffstelle ein Bereich, der eine der ursprünglichen Richtung entgegengesetzte Magnetisierungsrichtung aufweist. Ein solcher Bereich wird auch als "spot" bezeichnet.

Die eingeschriebenen Daten können gezielt durch lokales Erhitzen der Aufzeichnungsschicht (B) z.B. mittels eines Laserstrahls in einem externen oder intrinsischen magnetischen Feld, dessen Feldlinien senkrecht zur Schichtoberfläche ausgerichtet sind, bei Bedarf wieder gelöscht werden, wonach man neue Daten einschreiben kann. D.h. der Schreibvorgang ist reversibel.

2

Für das Lesen der Daten verwendet man linear polarisiertes Licht eines kontinuierlich emittierenden Dauerstrichlasers, dessen Lichtleistung nicht dazu ausreicht, das Material über die kritische Temperatur hinaus zu erwärmen. Dieser Laserstrahl wird entweder von der Aufzeichnungsschicht (B) selbst oder von einer hinter ihr angeordneten Reflektionsschicht reflektiert, wobei es zu einer Wechselwirkung zwischen den magnetischen Momenten in der Aufzeichnungsschicht (B) und dem magnetischen Vektor der Laserlichtwelle kommt. Durch diese Wechselwirkung wird die Ebene der Polarisation $\vec{E}$ des Laserlichts, welches von einem "spot" oder von einer dahinter liegenden Reflektionsschicht reflektiert wird, gegenüber der ursprünglichen Ebene um einen kleine Winkel gedreht. Geschieht diese Drehung der Ebene der Polarisation $\vec{E}$ bei der Reflektion des Lichts an der Aufzeichnungsschicht (B) selbst, so bezeichnet man dies als Kerr-Effekt und den Drehwinkel demnach als Kerr-Drehwinkel; wird dagegen die Ebene beim zweimaligen Durchgang des Lichts durch die Aufzeichnungsschicht gedreht, so spricht man vom Faraday-Effekt und vom Faraday-Drehwinkel.

Diese Drehung der Ebene der Polarisation $\vec{E}$ des vom Aufzeichnungsmaterial reflektierten Laserlichts wird mit Hilfe geeigneter optischer und elektronischer Geräte gemessen und in Signale umgesetzt.

Wenn bei den bekannten Aufzeichnungsmaterialien beim Lesen der Daten der Faraday-Effekt ausgenutzt wird, so müssen diese notwendigerweise eine Reflektionsschicht enthalten, da die Aufzeichnungsschichten (B) als solche lichtdurchlässig sind. Überdies müssen Interferenzschichten vorhanden sein, um störende Beugungserscheinungen zu unterdrücken. Selbstverständlich wirken die in den bekannten Aufzeichnungsmaterialien vorhandenen Interferenzschichten, Reflektionsschichten und Antioxidationsschichten sowie deren Kombinationen auch als Sauerstoffsperren, welche in gewissem Umfang verhindern, daß die äußerst sauerstoff- und wasserempfindliche Aufzeichnungsschicht (B) korrodiert. Sie erfüllen diese Funktion indes nicht in einem für die Praxis ausreichendem Maß, so daß zusätzlich noch Antikorrosionsschichten mitverwendet werden müssen, welche das Aufzeichnungsmaterial gegen die Luft hin abschließen.

Die bekannte Kombination aus einer Interferenzschicht, einer Reflektionsschicht und einer Antioxidationsschicht ist an und für sich nicht als eine einzige, aus mehreren separaten Lagen zusammengesetzte Antikorrosionsschicht aufzufassen, weil der Aufbau und die Zusammensetzung der Kombination nicht ausschließlich von der Antikorrosionswirkung, sondern in der Hauptsache von den anderen Funktionen bestimmt werden.

Hinsichtlich der Antikorrosionswirkung weist die bekannte Kombination Nachteile auf. Insbesondere läßt ihre Wirkung als Sauerstoffsperre zu wünschen übrig, sofern sie nicht auf der Luftseite eine vergleichsweise dicke Schicht aus beispielsweise Aluminiumoxid enthält. Außerdem ergeben sich aus der nach anderen Gesichtspunkten getroffenen Auswahl der Komponenten der übrigen Schichten Nachteile hinsichtlich der Haftung der Schichten aufeinander, der Haltbarkeit, der inneren Spannung oder der mechanischen Festigkeit. So kann eine bekannte Kombination, welche hinsichtlich der Interferenz und Reflektion optimal sein mag, eine geringe Antikorrosionswirkung aufweisen. Oder aber ihre Antikorrosionswirkung ist zwar befriedigend, indessen läßt ihre Haltbarkeit zu wünschen übrig. Wählt man Komponenten, welche eine besonders harte obere Schicht liefern, kann die bekannte Schichtkombination insgesamt so spröde werden, daß sie bei geringer mechanischer Beanspruchung zerspringt. Überdies können innere Spannungen darin Risse hervorrufen. All dies ist der Antikorrosionsschutzwirkung abträglich.

Der Schutz vor Korrosion ist jedoch gerade bei den in Rede stehenden Aufzeichnungsmaterialien von grundlegender Bedeutung, weil deren Aufzeichnungsschichten (B) äußerst schnell durch Wasser und/oder Luftsauerstoff zerstört werden, was den Totalverlust der darin eingeschriebenen Daten zur Folge hat.

Es bestand deshalb der Zwang, die bislang bekannten Schichten oder Schichtkombinationen bezüglich ihrer Antikorrosionswirkung über ihre Herstellung, ihren Schichaufbau und/oder ihre stoffliche Zusammensetzung weiter zu verbessern:

So geht aus der DE-A-35 28 701 ein Aufzeichnungsmaterial hervor, dessen Aufzeichnungsschicht (B) auf ihrer dem Träger (A) abgewandten Seite von einer Antikorrosionsschicht aus Wolfram-, Bor-, Molybdän-, Hafnium-, Niob-, Titan-, Chrom-, Vanadium-, Tantal- oder Siliciumcarbid bedeckt ist.

Aus der US-A-4 680 742 ist ein Aufzeichnungsmaterial bekannt, dessen Interferenzschicht aus Siliciumnitrid zwischen dem Träger (A) und der Aufzeichnungsschicht (B) auch hinsichtlich der Antikorrosionswirkung durch die Zugabe von Yttrium, Lanthan, Cer, Titan, Zirkon, Chrom, Molybdän, Antimon, Wismut, Silicium, Germanium, Zinn, Blei, Aluminium, Zink oder Cadmium oder deren Oxide, Nitride, Sulfide und Silicide verbessert wurde. Diese Zusätze sind im Siliciumnitrid in einer Menge von 0,1 bis 20 Mol-%, insbesondere 4 bis 20 Mol-% enthalten.

Desweiteren ist aus der EP-A-0 233 062 ein Aufzeichnungsmaterial bekannt, dessen Aufzeichnungsschicht (B) zumindest auf einer Seite mit einer Schutzschicht oder Antikorrosionsschicht bedeckt ist, welche im wesentlichen aus einem kovalent gebundenden Material aus wenigstens drei Komponenten besteht, die man aus der Gruppe Silicium, Aluminium, Sauerstoff und Stickstoff ausgewählt hat.

Überdies geht aus der EP-A-0 231 672 ein Aufzeichnungsmaterial hervor, dessen Aufzeichnungsschicht (B) zumindest auf der dem Träger (A) zugewandten Seite mit einer Schutzschicht oder Antikorrosionsschicht bedeckt ist, welche man durch gemeinsames Abscheiden von

(i) La, Ce, Pr, Nd, Pm, Sm, Eu, Gd, Tb, Dy, Ho, Er, Tm, Yb oder Lu und

(ii) $SiO_2$, $Al_2O_3$, CaO, $La_2O_3$, MgO, $Sb_2O_3$, SiO, $SnO_2$, $ZrO_2$, ZnS, CdS, PbS, $Sb_2S_3$, $AlF_3$, $CaF_2$, $CeF_3$, $MgF_2$, $NaAlF_6$, NaF, LiF, $NaF_3$, $PbF_2$, $ThF_4$, AlN, $Si_3N_4$, TiN, TiC, SiC, $Cr_3C_2$, $Mo_2C$ oder WC aus der Gasphase hergestellt hat.

Indessen treten bei der Verwendung solcher Interferenz- und/oder Antikorrosionsschichten in nicht vorhersagbarer Weise neue Nachteile auf, welche der Qualität und der Lebensdauer der Aufzeichnungsmaterialien abträglich sind. So kommt es häufig zu einer Lochfraßkorrosion ("pinhole corrosion") in den betreffenden Aufzeichnungsschichten (B), welche vor allem auf Reaktionen zwischen den Komponenten der Antikorrosionsschichten und der Lanthanid-Übergangsmetall-Legierung der Aufzeichnungsschichten (B) zurückzuführen ist.

Hinsichtlich des Schutzes der Aufzeichnungsschichten (B) vor Korrosion wurde mit Hilfe der in der deutschen Patentanmeldung P 36 16 736.7 [O.Z. 0050/39188] beschriebenen Antikorrosionsschicht ein bedeutsamer Fortschritt erzielt. Diese Antikorrosionsschicht ist 30 bis 250 nm dick und besteht aus zwei oder mehr Komponenten, welche in vier oder mehr separaten Lagen aus jeweils einer der Komponenten vorliegen. Hierbei wird mindestens eine der Komponenten aus der Gruppe der Elemente B, Al, Si, Ti, Zr, Hf, V, Nb, Ta, Cr, Mo, W und mindestens eine andere der Komponenten aus der Gruppe der Carbide, Nitride und Oxide dieser Elemente ausgewählt. Desweiteren bestehen direkt benachbarte Lagen stets aus voneinander verschiedenen Komponenten. Wegen ihrer aus Elementen bestehenden Lage(n) ist diese Antikorrosionsschicht indes nicht optisch klar. Sie kann daher lediglich zum Abdecken der Seite der Aufzeichnungsschicht (B) verwendet werden, welche nicht mit Laserlicht bestrahlt wird. So kann die Antikorrosionsschicht - wie es eigentlich aufgrund ihrer hervorragenden antikorrosiven Wirkung wünschenswert wäre - nicht als Interferenzschicht zwischen dem Träger (A) und der Aufzeichnungsschicht (B) verwendet werden. Es besteht daher nach wie vor ein dringender Bedarf nach optisch transparenten Schichten, welche sowohl als Antikorrosionsschicht als auch als Interferenzschicht verwendet werden können. Hierbei sollen diese Schichten bezüglich beider Funktion ein optimales Eigenschaftsprofil aufweisen; außerdem sollen die Schichten in einfacher Weise den jeweils verwendeten Aufzeichnungsschichten (B) und Trägern (A) angepaßt werden können - ein Anforderungsprofil, welches von den bekannten Schichten bislang nicht in praxisgerechter Weise erfüllt wird, was von Nachteil ist. Aus diesem Grunde weisen die flächenförmigen, mehrschichtigen, magneto-optischen Aufzeichnungsmaterialien des Standes der Technik gleichfalls Nachteile auf, welche sich vor allem in ihrem vergleichsweise niedrigen Signal-Rausch-Verhältnis, ihrer vergleichsweise hohen Bitfehlerrate, ihrer ungünstigen Pulsbreitenverteilung ("jitter"), dem unbefriedigenden Ansprechen der Spurlagenservo- und Autofokussiereinrichtungen in den laseroptischen Schreib- und Leseköpfen der Plattenlaufwerke, d.h. dem "tracking"-Verhalten der Aufzeichnungsmaterialien, und in ihrer vergleichsweise kurzen Lebensdauer manifestieren.

Aufgabe der vorliegenden Erfindung ist es, eine neues, flächenförmiges, mehrschichtiges magneto-optisches Aufzeichnungsmaterial zu finden, welches die Nachteile des Standes der Technik nicht mehr länger aufweist.

Demgemäß wurde das eingangs definierte, neue, flächenförmige, mehrschichtige magento-optische Aufzeichnungsmaterial gefunden, welches im folgenden der Kürze halber als "erfindungsgemäßes Aufzeichnungsmaterial" bezeichnet wird.

Im Rahmen der Erfindung werden unter dem Begriff "flächenförmig" alle Raumformen zusammengefaßt, deren Dicke erheblich geringer ist als ihre Länge und Breite. Die erfindungsgemäßen Aufzeichnungsmaterialien können demnach band-, platten- oder scheibenförmig sein, wobei die scheibenförmigen - welche im allgemeinen als "Datenplatten" oder "Disks" bezeichnet werden - von Vorteil sind.

Erfindungsgemäß wesentlicher Bestandteil des erfindungsgemäßen Aufzeichnungsmaterials ist die neue Schicht (C).

Vorteilhafterweise ist die neue Schicht (C) optisch transparent, d.h., daß sie das zum Schreiben und Lesen von Daten verwendete Laserlicht weder streut noch in einem größeren Ausmaß absorbiert, sondern das betreffende Laserlicht ohne wesentliche Änderung seiner Intensität und seines Strahlquerschnitts passieren läßt. Sofern die neue Schicht (C) auf derjenigen Seite der Aufzeichnungsschicht (B) liegt, welche nicht vom Laserlicht getroffen wird, kann sie auch opak sein.

Die neue Schicht (C) ist polykristallin oder röntgenamorph.

Hierbei ist die polykristalline neue Schicht (C) aus Kristalliten (Mikrokristallen) aufgebaut, deren Größe zwar im Nanometerbereich liegt, welche indes noch immer Röntgenstrahlung zu beugen vermögen.

Dagegen liefert die röntgenamorphe neue Schicht (C) bei Bestrahlen mit Röntgenstrahlung keine Beugungsbilder mehr und gleicht in dieser Hinsicht dem bekanntermaßen amorphen Glas.

Die polykristalline neue Schicht (C) entspricht in ihren optischen und anwendungstechnischen Eigenschaften sowie in ihrer besonderen vorteilhaften Wirkung weitgehend der röntgenamorphen neuen Schicht (C), wobei sich in Abhängigkeit von Verwendungszweck gewisse Unterschiede ergeben können, die indes vorteilhaft nutzbar sind.

Ihrer Natur nach entspricht die neue Schicht (C) einem keramischen Material, worunter man früher anorganische technische Produkte oder Werkstoffe verstanden hat, die durch Glühen ("Brennen") von Materialien wie Tonen u.a. erhalten werden und die eine hohe physikalische und chemische Stabilität aufweisen. Die Bedeutung dieses Begriffs ist in den letzten Jahren wegen der stürmischen Entwicklung auf dem Gebiet der anorganischen technischen Werkstoffe erheblich erweitert worden, und er umfaßt nun auch Materialien, welche nicht durch Glühen oder Brennen, sondern mittels anderer Methoden hergestellt werden. Diese Materialien weisen ein Eigenschaftsprofil auf, welches dasjenige klassischer Keramiken in zahlreicher Hinsicht übertrifft und oftmals ungewöhnliche Eigenschaften mit einschließt. Diese Materialien werden daher häufig als "modern ceramics" bezeichnet. Die neue Schicht (C) ist daher ihren Eigenschaften und ihrer Zusammensetzung nach als Carbid-, Oxid- und/oder Nitridkeramik aufzufassen, d.h. sie besteht entweder aus Carbiden, Oxiden oder Nitriden oder sie besteht aus Mischungen von Oxiden mit Nitriden, Oxiden mit Carbiden, Carbiden mit Nitriden oder Oxiden und Carbiden mit Nitriden.

Besteht die neue Schicht (C) beispielsweise aus Oxiden und Nitriden, so liegen der Sauerstoff und Stickstoff in statistischer Verteilung in der Schicht (C) vor, d.h. die Schicht (C) ist homogen, wobei sie polykristallin oder röntgenamorph ist. Oder aber die neue Schicht (C) ist eine Oxid/Nitrid-Keramik, worin Mikrokristalle aus Oxiden neben Mikrokristallen aus Nitriden in statistischer Verteilung nebeneinander vorliegen, d.h. die neue Schicht (C) ist ein polykristallines Gemenge. Das gilt sinngemäß auch für neue Schichten (C), welche aus Oxiden und Carbiden, Carbiden und Nitriden oder aus Oxiden, Carbiden und Nitriden bestehen.

Oder aber die polykristalline oder röntgenamorphe neue Schicht (C) weist beispielsweise hinsichtlich der Verteilung des Sauerstoffs und Stickstoffs über die Schichtdicke hinweg einen Gradienten auf. Dies bedeutet, daß die Konzentration des Stickstoffs, ausgehend von einer Seite der Schicht (C), zu der anderen Seite hin gleichmäßig zunimmt, wobei die Konzentration des Sauerstoffs in entsprechender, durch die Stöchiometrie zwingend festgelegter Weise abnimmt. Oder dies bedeutet, daß die Konzentration des Stickstoffs, ausgehend von einer Seite der Schicht (C) zunächst zunimmt, um dann wieder allmählich, d.h. fließend, oder abrupt abzunehmen, wobei auch hier die Konzentration des Sauerstoffs in entsprechender Weise ab- und anschließend wieder zunimmt. Letzteres kann über die gesamte Dicke der Schicht (C) hinweg mehrmals der Fall sein, wodurch ein mehrlagiger Aufbau der Schicht (C) resultiert. Das gilt sinngemäß auch für neue Schichten (C), welche aus Oxiden und Carbiden, Carbiden und Nitriden oder aus Oxiden, Carbiden und Nitriden bestehen.

Diese mehrlagigen neuen Schichten (C) bestehen aus zwei oder mehr separaten Lagen, wobei es sich bei einer separaten Lage jeweils um eine Carbid-, Nitrid- oder Oxidlage oder um eine Carbid/Oxid-, Carbid/Nitrid-, Oxid/Nitrid- oder eine Carbid/Oxid/Nitridlage handelt.

In den allermeisten Fällen genügen drei bis fünf separate Lagen für die Einstellung eines optimalen Eigenschaftsprofils, in besonderen Fällen werden Schichten (C) aus sechs, sieben oder acht Lagen verwendet. Schichten (C) aus neun, zehn oder mehr Lagen werden seltener angewendet, weil hierbei der höhere Herstellaufwand nicht durch eine weitere Steigerung der an sich schon besonders vorteilhaften Eigenschaften gerechtfertig wird. Von besonderem Vorteil sind daher Schichten (C) aus drei bis fünf Lagen, weil sie mit dem geringsten Aufwand herzustellen sind und dabei bereits optimale Eigenschaften aufweisen.

Die Lagen dieser Schichten (C) können unterschiedliche Dicken aufweisen. Von Vorteil ist es indes, wenn sie von in etwa gleicher Dicke sind.

Der Übergang von einer Lage zur nächsten kann abrupt sein, d.h., daß sich zwischen den Lagen eine exakt definierte Grenzfläche befindet, wie etwa beim Übergang von einer stöchiometrisch zusammengesetzten Nitrid- in eine Oxid- oder Carbidlage. Der Übergang kann aber auch fließend sein. So kann z.B. eine stöchiometrisch zusammengesetzte Nitridlage über eine Zone, in welcher die Konzentration des Stickstoffs mehr oder weniger rasch abnimmt und die Konzentration des Sauerstoffs oder des Kohlenstoffs mehr oder weniger rasch zunimmt, in eine reine Oxid- oder eine reine Carbidlage übergehen.

Erfindungsgemäß von Vorteil ist hierbei der fließende Übergang von einer Lage in die nächste.

Unabhängig davon, ob man eine polykristalline oder röntgenamorphe, ein- oder mehrlagige neue Schicht (C) aus Nitriden, Carbiden und Oxiden verwendet, ist es erfindungsgemäß von besonderem Vorteil, wenn diejenige Seite der neuen Schicht (C), welche der Aufzeichnungsschicht (B) zugewandt ist oder direkt an diese angrenzt, in der Hauptsache oder zur Gänze aus Nitriden besteht.

Unabhängig davon, ob man eine polykristalline oder röntgenamorphe, ein- oder mehrlagige neue Schicht (C) aus Nitriden und Oxiden, Carbiden und Oxiden, Nitriden und Carbiden oder aus Carbiden, Oxiden und Nitriden oder eine polykristalline oder röntgenamorphe neue Schicht (C) aus Carbiden, Oxiden oder Nitriden verwendet ist, die neue Schicht (C) bis zu 1000 nm dick. Wegen ihrer besonderen Eigenschaften und technischen Effekte erübrigen sich höhere Schichtdicken. Überdies ist mit dem hierfür notwendigen höheren Materialverbrauch nur eine vergleichsweise geringe weitere Steigerung des ohnedies schon vorteilhaften Eigenschaftsprofils verbunden. Die Dicke der neuen Schicht (C) soll andererseits 20 nm nicht unterschreiten, weil dann beispielsweise ihre Sperrwirkung gegenüber Sauerstoff und Wasser nicht mehr in vollem Umfang befriedigt. Von Vorteil sind Dicken von 40 bis 800 nm, wobei der Dickenbereich von 40 bis 500 besonders und der Bereich von 50 bis 250 nm ganz besonders hervorzuheben ist. Innerhalb des Dickenbereichs von 50 bis 250 nm wiederum kommt dem Berich von 50 bis 100 nm eine besondere Bedeutung zu, weil neue Schichten (C) dieser Dicke hinsichtlich der Sperrwirkung, des Material- verbrauchs, des Herstellaufwandes, der mechanischen Festigkeit, der Zähigkeit und der Haltbarkeit ein optimales Eigenschaftsprofil und somit eine besonders breite Anwendbarkeit aufweisen. Demnach stellt der Bereich von 50 bis 100 nm ein Optimum dar, innerhalb dessen die Dicke der Schicht (C) variiert und in vorteilhafter Weise den anderen stofflichen und technischen Parametern der erfindungsgemäßen Aufzeichnungsmaterialien vorzüglich angepaßt werden kann.

Unabhängig davon, ob man 20 bis 1000 nm dicke, polykristalline oder röntgenamorphe, ein- oder mehrlagige neue Schichten (C) aus Nitriden und Oxiden, Carbiden und Oxiden, Nitriden und Carbiden oder aus Carbiden, Oxiden und Nitriden oder 20 bis 1000 nm dicke, polykristalline oder röntgenamorphe neue Schichten (C) aus Carbiden, Oxiden oder Nitriden verwendet, wird die Carbid-, Oxid- und/oder Nitridkeramik dieser Schichten (C) stets von der erfindungsgemäß zu verwendenden Elementzusammensetzung I gebildet.

Dies bedeutet, daß die Keramiken der neuen Schichten (C) bezüglich der Elementzusammensetzung I über ihr gesamtes Volumen hinweg einen gleichmäßigen oder weitgehend gleichmäßigen Aufbau haben, d.h. die Schichten (C) sind hinsichtlich der Elementzusammensetzung I frei oder weitgehend frei von Konzentrationsgradienten.

Selbstverständlich kann hierbei auf eine neue Schicht (C) mindestens eine weitere neue Schicht (C) aufgebracht werden, welche sich hinsichtlich der Elementzusammensetzung I von der unter ihr liegenden neuen Schicht (C) unterscheidet.

Die erfindungsgemäß zu verwendende Elementzusammensetzung I gibt das Molverhältnis, in welchem die übrigen Komponenten der Carbid-, Oxid- und/oder Nitridkeramiken zueinanderstehen, im Überblick wieder. Dieses Molverhältnis ist für eine gegebene Schicht (C) von vornherein zur Gänze oder weitgehend festgelegt. Dagegen variiert das Molverhältnis von Kohlenstoff, Sauerstoff und/oder von Stickstoff zur Elementzusammensetzung I je nach vorgegebener Elementzusammensetzung I in der von der Wertigkeit der Atome und/oder von der Anzahl der vorhandenen elektrisch positiven oder elektrisch negativen Ladungen zwingend vorgeschriebenen Weise. Somit läßt sich der Kohlenstoff-, Sauerstoff- und/oder der Stickstoffgehalt einer neuen Schicht (C) über die jeweils verwendete Elementzusammensetzung I leicht berechnen, weswegen sich im folgenden die genaue Angabe des jeweiligen Kohlenstoff-, Sauerstoff- und/oder Stickstoffgehaltes erübrigt und die pauschale Angabe, daß es sich beispielsweise um eine Oxid- oder Nitridschicht (C) oder um eine Oxid- und Nitridschicht (C) eines bestimmten Sauerstoff/Stickstoff-Verhältnisses handelt, für die vollständige stoffliche Charakterisierung der betreffenden neuen Schicht (C) ausreicht.

Die erfindungsgemäß zu verwendende Elementzusammensetzung I enthält die Komponente(n) Aluminium und/oder Silicium. Darüber hinaus enthält die Elementzusammensetzung I die Komponenten $M^1$ und $M^2$. Sie werden aus der Gruppe ausgewählt, welche Titan, Zirkon, Hafnium, Thorium, Scandium, Yttrium, Lanthan, Cer, Praseodym, Neodym, Samarium, Europium, Gadolinium, Terbium, Dysprosium, Holmium, Erbium, Thulium, Ytterbium, Luthetium, Vanadin, Niob, Tantal, Chrom, Molybdän, Wolfram, Mangan, Rhenium, Eisen, Kobalt, Rhodium, Kupfer, Zink, Magnesium, Calcium, Strontium, Barium, Bor, Gallium, Indium, Thallium, Germanium, Zinn, Blei, Phosphor, Arsen, Antimon und Tellur enthält. Hierbei sind $M^1$ und $M^2$ voneinander verschieden. Handelt es sich bei $M^1$ und $M^2$ um Lanthan oder um Lanthanide, dann können $M^1$ und $M^2$ auch gleich sein.

Überdies kann die erfindungsgemäß zu verwendende Elementzusammensetzung I die von $M^1$ und $M^2$ verschiedene Komponente $M^3$ enthalten, welche gleichfalls aus der vorstehend genannten Gruppe ausgewählt wird. Sofern es sich bei $M^3$ um Lanthan oder ein Lanthanid handelt, kann $M^3$ auch gleich $M^1$ und $M^2$ sein.

Beispiele erfindungsgemäß geeigneter Kombinationen von obligatorischen und fakultativen Komponenten sind der folgenden Zusammenstellung zu entnehmen:

6

| Zusammenstellung 1 | | | | |
|---|---|---|---|---|
| Kombination Nr. | Al und/oder Si | $M_1$ | $M_2$ | $M_3$ |
| I-1 | Al | Zr | Hf | - |
| I-2 | Al, Si | Hf | P | - |
| I-3 | Si | V | Nb | Zn |
| I-4 | Al | Ta | Cr | B |
| I-5 | Al | Ti | Mo | - |
| I-6 | Al, Si | Ti | Re | - |
| I-7 | Al, Si | W | Fe | Sn |
| I-8 | Al | Cu | Zn | - |
| I-9 | Si | Mn | Re | Ba |
| I-10 | Si | Fe | Zn | B |
| I-11 | Si | Sn | B | P |
| I-12 | Si | Mg | B | - |
| I-13 | Al, Si | Mo | W | - |
| I-14 | Al | Mg | Sr | - |
| I-15 | Al | Cu | P | - |
| I-16 | Si | Ta | Cr | Sn |
| I-17 | Al, Si | Ti | Fe | P |
| I-18 | Al, Si | B | P | - |
| I-19 | Al, Si | Sn | B | - |
| I-20 | Al, Si | Cu | Zn | - |
| I-21 | Si | Cr | Mo | - |
| I-22 | Si | Cr | W | Ba |
| I-23 | Al | Zn | Sn | - |
| I-24 | Si | Zn | Sn | Sr |
| I-25 | Al, Si | Zr | Cr | - |
| I-26 | Al, Si | Zr | Cr | B |
| I-27 | Si | V | Sn | - |
| I-28 | Si | V | Nb | Ta |
| I-29 | Al | Zn | B | P |
| I-30 | Al | Mn | Fe | - |
| I-31 | Al, Si | Mo | Fe | B |
| I-32 | Al, Si | La | La | - |
| I-33 | Al, Si | Ce | La | - |
| I-34 | Si | Co | Rh | Th |
| I-35 | Al, Si | Sm | Sm | - |
| I-36 | Al | Pb | Sb | Ca |
| I-37 | Si | Dy | Dy | Dy |

In den erfindungsgemäß zu verwendenden Elementzusammensetzungen I stehen die Komponenten in einem bestimmten Molverhältnis zueinander.

So enthält die Elementzusammensetzung I nur Aluminium, was der anspruchsgemäßen Bedingung x = 1 entspricht, oder sie enthält nur Silicium, was der anspruchsgemäßen Bedingung x = 0 entspricht. Sofern sie Aluminium und Silicium enthält, ist x eine beliebige positive Zahl zwischen 0 und 1, vorzugsweise 0,001 und 0,999, vorteilhafterweise 0,01 und 0,09 und insbesondere 0,1 und 0,9.

Das Molverhältnis von Aluminium und/oder Silicium zu den Komponenten $M^1$, $M^2$ und ggf. $M^3$ liegt bei 0,695 bis 0,990, vorzugsweise 0,700 bis 0,980, vorteilhafterweise 0,720 bis 0,950 und insbesondere 0,750 bis 0,90, was der anspruchsgemäßen Bedingung
z = 0,010 bis 0,305, vorzugsweise 0,020 bis 0,300, vorteilhafterweise 0,050 bis 0,280 und insbesondere 0,100 bis 0,250
entspricht.

Das Molverhältnis von $M^1$ und $M^2$ liegt bei 30:1 bis 1:30, was unter Beachtung der Bedingung
z = r + s + t (mit t = 0)
den anspruchsgemäßen Bedindungen:

r und s   jeweils gleich 0,005 bis 0,15, vorzugsweise 0,010 bis 0,15, vorteilhafterweise 0,025 bis 0,14 und insbesondere 0,050 bis 0,125 .

entspricht.

Sofern neben $M^1$ und $M^2$ noch die Komponente $M^3$ vorhanden ist, liegt das Molverhältnis von $M^3$ zu ($M^1$ + $M^2$) allerhöchstens bei 1:2, was unter Beachtung der Bedingung

$z = r + s + t$ (mit $t \geq 0$)

der anspruchgemäßen Bedingung

$t = 0$ bis 0,005

entspricht.

Beispiele vorteilhafter erfindungsgemäß zu verwendender Elementzusammensetzung I sind der folgenden Zusammenstellung 2 zu entnehmen:

Zusammenstellung 2

| | |
|---|---|
| I-1a | $Al_{0,75}\ Zr_{0,123}\ Hf_{0,127}$; |
| I-2a | $(Al_{0,9}\ Si_{0,1})_{0,95}\ Hf_{0,04}\ P_{0,01}$; |
| I-3a | $Si_{0,986}\ V_{0,005}\ Nb_{0,005}\ Zn_{0,004}$; |
| I-4a | $Al_{0,699}\ Ta_{0,15}\ Cr_{0,15}\ B_{0,001}$; |
| I-5a | $Al_{0,83}\ Ti_{0,12}\ Mo_{0,05}$; |
| I-6a | $(Al_{0,01}\ Si_{0,99})_{0,891}\ Ti_{0,1}\ Re_{0,009}$; |
| I-7a | $(Al_{0,2}\ Si_{0,8})_{0,868}\ W_{0,03}\ Fe_{0,1}\ Sn_{0,002}$ |
| I-8a | $Al_{0,9}\ Cu_{0,06}\ Zn_{0,04}$; |
| I-9a | $Si_{0,913}\ Mn_{0,08}\ Re_{0,006}\ Ba_{0,001}$; |
| I-10a | $Si_{0,787}\ Fe_{0,11}\ Zn_{0,1}\ B_{0,003}$; |
| I-11a | $Si_{0,919}\ Sn_{0,05}\ B_{0,03}\ P_{0,001}$; |
| I-12a | $Si_{0,73}\ Mg_{0,13}\ B_{0,14}$; |
| I-13a | $(Al_{0,56}\ Si_{0,44})_{0,97}\ Mo_{0,01}\ W_{0,02}$; |
| I-14a | $Al_{0,7}\ Mg_{0,15}\ Sr_{0,15}$; |
| I-15a | $Al_{0,985}\ Cu_{0,005}\ P_{0,01}$; |
| I-16a | $Si_{0,988}\ Ta_{0,006}\ Cr_{0,005}\ Sn_{0,001}$; |
| I-17a | $(Al_{0,1}\ Si_{0,9})_{0,746}\ Ti_{0,15}\ Fe_{0,1}\ P_{0,004}$; |
| I-18a | $(Al_{0,9}\ Si_{0,1})_{0,845}\ B_{0,15}\ P_{0,005}$; |
| I-19a | $(Al_{0,72}\ Si_{0,28})_{0,78}\ Sn_{0,12}\ B_{0,1}$; |
| I-20a | $(Al_{0,99}\ Si_{0,01})_{0,9}\ Cu_{0,05}\ Zn_{0,05}$; |
| I-21a | $Si_{0,864}\ Cr_{0,13}\ Mo_{0,006}$; |
| I-22a | $Si_{0,795}\ Cr_{0,1}\ W_{0,1}\ Ba_{0,005}$; |
| I-23a | $Al_{0,73}\ Zn_{0,14}\ Sn_{0,13}$; |
| I-24a | $Si_{0,827}\ Zn_{0,14}\ Sn_{0,03}\ Sr_{0,003}$; |
| I-25a | $(Al_{0,8}\ Si_{0,2})_{0,88}\ Zr_{0,07}\ Cr_{0,05}$; |
| I-26a | $(Al_{0,5}\ Si_{0,5})_{0,983}\ Zr_{0,006}\ Cr_{0,006}\ B_{0,005}$; |
| I-27a | $Si_{0,895}\ V_{0,005}\ Sn_{0,1}$; |
| I-28a | $Si_{0,866}\ V_{0,007}\ Nb_{0,125}\ Ta_{0,002}$; |
| I-29a | $Al_{0,798}\ Zn_{0,1}\ B_{0,1}\ P_{0,002}$; |
| I-30a | $Al_{0,84}\ Mn_{0,01}\ Fe_{0,14}$; |
| I-31a | $(Al_{0,99}\ Si_{0,01})_{0,845}\ Mo_{0,01}\ Fe_{0,14}\ B_{0,005}$; |
| I-32a | $(Al_{0,85}\ Si_{0,15})_{0,8}\ La_{0,2}$; |
| I-33a | $(Al_{0,93}\ Si_{0,07})_{0,95}\ Ce_{0,03}\ La_{0,02}$; |
| I-34a | $Si_{0,975}\ Co_{0,01}\ Rh_{0,01}\ Th_{0,005}$; |
| I-35a | $(Al_{0,73}\ Si_{0,27})_{0,98}\ Sm_{0,02}$; |
| I-36a | $Al_{0,8}\ Pb_{0,14}\ Sb_{0,055}\ Ca_{0,005}$ oder |
| I-37a | $Si_{0,7}\ Dy_{0,3}$. |

Methodisch weist die Herstellung der neuen Schichten (C) keine Besonderheiten auf, sondern sie erfolgt nach den üblichen und bekannten Techniken der Herstellung dünner Carbid-, Oxid- und/oder Nitridkeramikschichten durch Aufdampfen, reaktives Aufdampfen, Ionenplattieren (Ionplating), "ion cluster beam deposition" (ICB) oder Kathodenzerstäubung ("sputtering"), inklusive reaktiver Kathodenzerstäubung ("reactive sputtering").

Von diesen Techniken wird die reaktive Kathodenzerstäubung mit Vorteil und die reaktive Magnetronkathodenzerstäubung ("reactive magnetron sputtering") mit ganz besonderem Vorteil angewendet.

Bei der reaktiven Kathodenzerstäubung wird bekanntermaßen das Material einer Kathode ("target") durch Beschuß mit Helium-, Neon-, Argon-, Krypton- und/oder Xenonionen in die Gasphase überführt (zerstäubt). Dem in dieser Weise resultierenden Prozeßgas werden weitere Komponenten - z.B. Kohlenwasserstoffe, Sauerstoff und/oder Stickstoff - zugemischt, welche zusammen mit dem zerstäubten Kathodenmaterial auf der zu beschichtenden Oberfläche als dünne Schicht niedergeschlagen werden. Bei der reaktiven Magnetronkathodenzerstäubung befindet sich das "target" bekanntermaßen in einem Magnetfeld.

Durch die Variation von Verfahrensparameter wie Zerstäubungs- und Abscheiderate sowie Prozeßgasdruck und -zusammensetzung können dann dünne Carbid-, Oxid- und/oder Nitridkeramikschichten der gewünschten Zusammensetzung ganz gezielt und sehr exakt polykristallin oder röntgenamorph hergestellt werden. Die Auswahl geeigneter Verfahrensparameter kann aufgrund der vorhandenen Fachkenntnisse auf dem Gebiet der reaktiven (Magnetron)Kathodenzerstäubung und/oder anhand von Vorversuchen getroffen werden.

Für die Herstellung der neuen Schichten (C) werden Kathoden ("targets") verwendet, welche die Elementzusammensetzung I aufweisen. Die "targets" haben die Form flacher Scheiben oder Platten und werden durch inniges Vermischen Homogenisieren und Formen aus ihren Komponenten Aluminium und/oder Silicium, sowie den vorstehend genannten Komponenten $M^1$, $M^2$ und ggf. $M^3$ mit Hilfe der üblichen und bekannten Misch- und Formungstechniken hergestellt.

Beispiele besonders geeigneter "target"-Zusammensetzungen I sind die Elementzusammensetzungen I-1a bis I-37a.

Im Rahmen der Herstellung der erfindungsgemäßen Aufzeichnungsmaterialien stellt die Herstellung der neuen Schicht (C) einen der für den Aufbau der Aufzeichnungsmaterialien notwendigen Verfahrensschritte dar. Hierbei ergibt sich die Abfolge der Verfahrensschritte zwingend aus dem gewünschten Aufbau der jeweils herzustellenden Aufzeichnungsmaterialien.

Der weitere wesentliche Bestandteil des erfindungsgemäßen Aufzeichnungsmaterials ist der optisch transparente dimensionsstabile Träger (A).

Vorteilhafte Träger (A) sind die üblichen und bekannten, scheibenförmigen, optisch klaren dimensionsstabilen Träger (A) eines Durchmessers von 90 oder 130 mm und einer Dicke von 1,2 mm. Sie bestehen im allgemeinen aus Glas oder aus Kunststoffen wie z.B. Polycarbonat, Polymethylmethacrylat, Polymethylpenten, Celluloseacetobutyrat oder aus Gemischen aus Poly(vinylidenfluorid) und Polymethylmethacrylat oder Polystyrol und Poly(2,6-dimethylpheny-1,4-ylen-ether). Hiervon sind die Träger (A) aus Kunststoffen besonders vorteilhaft.

Diejenige Oberfläche des dimensionsstabilen Trägers (A), welche der Aufzeichnungsschicht (B) zugekehrt ist, kann Strukturen aufweisen.

Die Strukturen in der Oberfläche des Trägers (A) liegen im Mikrometer- und/oder Submikrometerbereich. Sie dienen der exakten Führung des Leselaserstrahls und gewährleisten ein rasches und genaues Ansprechen der Spurlagenservo- und Autofokussiereinrichtungen in den laseroptischen Schreib- und Leseköpfen der Plattenlaufwerke, d.h. sie ermöglichen oder verbessern das "tracking". Außerdem können diese Strukturen selbst Daten sein, so wie dies beispielsweise bei den bekannten Audio- oder Video-Compact-Disks der Fall ist, oder sie können der Kodierung der eingeschriebenen Daten dienen. Die Strukturen bestehen aus erhabenen Teilen und/oder aus Vertiefungen. Diese liegen in der Form von durchgehenden konzentrischen oder spiralförmigen Spurrillen oder als isolierte Hügel und/oder Löcher vor. Außerdem kann die Struktur eine mehr oder wenige glatte Wellenform haben. Den Spurrillen wird hierbei der Vorzug gegeben. Sie weisen in ihrer Querrichtung eine rechteckige sägezahnartige, eine V-förmige oder eine trapezartige Kontur auf. Ihre Vertiefungen werden im allgemeinen als "grooves" und ihre erhabenen Teile als "land" bezeichnet. Von besonderem Vorteil sind Spurrillen mit 50 bis 200 nm tiefen und 0,4 bis 0,8 μm breiten "grooves", zwischen denen jeweils ein 1 bis 3 μm breites "land" liegt.

Die Herstellung des besonders bevorzugt verwendeten dimensionsstabilen Trägers (A) erfolgt in an sich bekannter Weise durch die formgebende Bearbeitung des den Träger (A) aufbauenden Kunststoffs oder Kunststoffgemischs mit Hilfe der Spritzgußtechnik unter Reinraumbedingungen, so wie dies beispielsweise im einzelnen in der deutschen Patentanmeldung P 37 27 093.1 [O.Z. 0050/39384] beschrieben wird.

Ganz besonders bevorzugt werden in dieser Weise dimensionsstabile Träger (A) mit Spurrillen auf einer ihrer Oberfläche hergestellt.

Der weitere wesentliche Bestandteil des erfindungsgemäßen Aufzeichnungsmaterials ist die magnetooptische Aufzeichungsschicht (B) aus einer amorphen Lanthanid-Übergangsmetall-Legierung. Die Aufzeichnungsschicht (B) ist 10 bis 500 nm dick. Für den Aufbau der Aufzeichnungsschicht (B) kommen die Lanthanide Pr, Nd, Sm, Eu, Gd, Tb, Dy und Ho und die Übergangsmetalle Fe und Co in Betracht.

Geeignete Mischungsverhältnisse von Lanthaniden zu Übergangsmetallen sind vom Stand der Technik her bekannt. Darüber hinaus kann die amorphe Lanthanid-Übergangsmetall-Legierung noch weitere Elemente wie Sc, Y, La, V, Nb, Ta, Cr, Mo, W, Mn, Ni, Re, Ru, Os, Rh, Ir, Pd, Pt, Cu, Ag, Au, Zn, B, Al, Ga, In, Si, Ge, Sn, Pb, P, As, Sb und/oder Bi in üblichen und bekannten Mengen enthalten.

Im Rahmen der Herstellung des erfindungsgemäßen Aufzeichnungsmaterials wird die Aufzeichnungsschicht (B) auf dem dimensionsstabilen Träger (A), vorteilhafterweise auf einer dem Träger (A) aufliegenden Schicht, mit Hilfe der vorstehend angegebenen Techniken zur Erzeugung dünner Schichten hergestellt.

Darüber hinaus kann das erfindungsgemäße Aufzeichnungsmaterial weitere Schichten enthalten, welche für die Funktion des Aufzeichnungsmaterials von Nutzen sind. Hierbei handelt es sich um die üblichen und bekannten Interferenzschichten, Reflektionsschichten, Antikorrosionsschichten, Haftschichten oder um weitere magnetisierbare Schichten. Außerdem können zwei erfindungsgemäße Aufzeichnungsmaterialien "sandwich"-artig miteinander verbunden werden, so daß ihre Aufzeichnungsschichten (B) einander zugekehrt sind und ein gewisser Abstand zwischen ihnen herrscht, wobei die üblichen und bekannten Techniken zum Verbindungen zweier Aufzeichnungsmaterialien angewandt werden.

Üblicherweise wird in den Aufzeichnungsschichten (B) nach der Herstellung der erfindungsgemäßen Aufzeichnungsmaterialien eine definierte, senkrecht zur Schichtoberfläche orientierte Magnetisierung induziert.

Das besonders bevorzugte erfindungsgemäße Aufzeichnungsmaterial ist eine magneto-optische Datenplatte oder Disk mit

1. dem vorstehend beschriebenen, besonders bevorzugt verwendeten dimensionsstabilen Träger (A),
2. der ersten neuen Schicht (C),
3. der vorstehend beschriebenen Aufzeichnungsschicht (B) und
4. der zweiten neuen Schicht (C),

sowie ggf. mit zusätzlichen üblichen und bekannten Schichten.

Die Herstellung der einzelnen Schichten dieser magneto-optischen Datenplatte erfolgt nach den vorstehend beschriebenen Methoden, wobei sich die Reihenfolge der Verfahrensschritte zwingend aus dem Aufbau (A), (C), (B), (C) ergibt.

Die erfindungsgemäßen Aufzeichnungsmaterialien können in üblicher Weise von der Seite des optisch transparenten dimensionsstabilen Trägers (A) her mit Hilfe eines impulsmodulierten, auf die Aufzeichnungsschichten (B) fokussierten und/oder senkrecht auf diese auftreffenden Schreiblaserstrahls einer Wellenlänge λ von kleiner als 1000 nm mit Daten in Form ummagnetisierter "spots" beschrieben werden. Hiernach können die Daten mit Hilfe eines auf die beschriebenen Aufzeichnungsschichten (B) fokussierten und/oder senkrecht auf sie auftreffenden Dauerstrichlaserstrahls gelesen werden, wobei man das von den Aufzeichnungsschichten (B) selbst oder das von den ggf. vorhandenen Reflektionsschichten zurückreflektierte Licht erfaßt, analysiert und in Signale umwandelt. Im Falle der erfindungsgemäßen Datenplatten oder Disks können hierfür die üblichen und bekannten laseroptischen Plattenlaufwerke mit laseroptischen Köpfen, welche Halbleiterlaser enthalten, verwendet werden.

Die erfindungsgemäßen Aufzeichnungsmaterialien weisen gegenüber dem Stand der Technik besondere Vorteile auf. Sie haben eine höhere Empfindlichkeit als bekannte Aufzeichnungsmaterialien, weswegen sie mit geringerer Laserleistung beschrieben werden können. Erfindungsgemäße magneto-optische Datenplatten (Disks) können daher - bei gleicher Laserleistung - bei höheren Plattendrehzahlen beschrieben werden als bekannte Disks. Auch ihre Bitdichte ist gegenüber dem Stand der Technik deutlich erhöht. Beim Lesen liefern sie unverzerrte Signale und weisen ein Signal-Rausch-Verhältnis von mehr als 55 dB auf. Selbst nach einer Lagerzeit von mehr als 1000 Stunden bei 70°C und einer relativen Luftfeuchtigkeit von 90 % kommt es nicht zu einer Erhöhung der Bitfehlerrate ("bit error rate"), d.h. es tritt kein Informationsverlust auf.

Die erfindungsgemäßen Aufzeichnungsmaterialien weisen zumindest eine neue Schicht (C) auf. Diese neue Schicht (C) ist kratzfest, hart, haftfest, mechanisch fest und nicht spröde. Wird die neue Schicht (C) als Antikorrosionsschicht verwendet, so schirmt sie die äußerst luft- und wasserempfindliche Aufzeichnungsschicht (B) hervorragend ab. Wird die neue Schicht (C) als optisch transparente Interferenzschicht zwischen dem Träger (A) und der Aufzeichnungsschicht (B) verwendet, so ist sie in ihrer optischen Anpassungswirkung herkömmlichen Interferenzschichten eindeutig überlegen. Hinzu kommt noch, daß die hervorragende antikorrosive Wirkung der neuen Schicht (C) auch hier voll zum Tragen kommt. Ganz besondere Vorteile ergeben sich, wenn man beide Seiten der Aufzeichnungsschicht (B) mit der neuen Schicht (C) bedeckt. Hierdurch wird vor allem die Lebensdauer der erfindungsgemäßen Aufzeichnungsmaterialien über die bislang erreichbare Zeit hinaus verlängert. Überdies macht es sich vorteilhaft bemerkbar, daß die neue Schicht (C) hinsichtlich ihrer optischen und mechanischen Eigenschaften sowie ihrer Haftungseigenschaften den übrigen Schichten des erfindungsgemäßen Aufzeichnungsmaterials in hervorragender und dennoch einfacher Weise angepaßt werden kann.

Beispiele

Beispiele 1 bis 37

Herstellung und anwendungstechnische Eigenschaften erfindungsgemäßer magneto-optischer Datenplatten

Es wurden als dimensionsstabile Träger (A) vierundsiebzig 130 mm durchmessende, 1,2 mm dicke, mit Spurrillen versehene Polycarbonatscheiben unter Reinraumbedingung durch Spritzgießen hergestellt.

Hiernach wurden unter Drehen der Polycarbonatscheiben (A) (37 Stück, Beispiele 1 bis 37) auf ihre mit Spurrillen versehene Seite die einzelnen Schichten (B) und (C) in der gewünschten Anzahl, Reihenfolge und Dicke und mit dem jeweils gewünschten inneren Aufbau aus der Gasphase aufgebracht. Dabei erfolgte das Aufbringen der neuen Schichten (C) durch reaktive Magnetronkathodenzerstäubung ("reactive magnetron sputtering") der betreffenden Elementzusammensetzungen I-1a bis I-37a (= "target"-Material) und durch Beimengen der gewünschten Mengen an Kohlenwasserstoffen, Sauerstoff und/oder Stickstoff zum jeweiligen Prozeßgas. Dagegen wurden die Aufzeichnungsschichten (B) durch Kathodenzerstäubung eines aus Tb, Dy und Fe bestehenden "targets" erzeugt. Hierbei wurden die Verfahrensparameter so gewählt, daß sich die in der Tabelle 1 angegebenen Zusammensetzungen der erfindungsgemäßen Datenplatten ergaben (Beispiele 1 bis 37).

Zur Überprüfung des Verfahrenserfolges und zu analytischen Zwecken wurden weitere 37 magneto-optische Datenplatten unter jeweils exakt vergleichbaren Bedinungen hergestellt (Beispiele 1a bis 37a). Anhand dieser Datenplatten wurden die Morphologie und die stoffliche Zusammensetzung der neuen Schichten (C) mittels üblicher und bekannter, z. T. materialabbauender Analysenmethoden wie chemische Elementaranalyse, Lichtmikroskopie, Rasterelektronenmikroskopie, Röntgenspektroskopie, Röntgenstreuung, ESCA (Elektronenspektroskopie für die chemische Analyse) und Flammenphotometrie untersucht. Desweiteren wurde mit Hilfe der üblichen und bekannten, zerstörungsfreien optischen und spektroskopischen Methoden sichergestellt, daß die jeweiligen neuen Schichten (C) der Beispielspaare (1, 1a) bis (37, 37a) jeweils miteinander identisch waren, so daß die anhand der Beispiele 1a bis 37a ermittelten stofflichen und morphologischen Parameter in die Tabelle 1 miteinfließen konnten.

Die Aufzeichnungsschichten (B) der magneto-optischen Datenplatten der Beispiele 1 bis 37 wurden unmittelbar nach ihrer Herstellung senkrecht zu ihrer Oberfläche magnetisiert. Anschließend wurden die Datenplatten während 48 Stunden bei 23 ± 2°C bei einem Luftdruck von 103 ± 3,5 kPa und bei einer relativen Luftfeuchte von 45 bis 55 % konditioniert.

Hiernach wurden die konditionierten Datenplatten mit Hilfe eines üblichen und bekannten Plattenlaufwerks unter exakt vergleichbaren Bedingungen mit Daten beschrieben. Hierzu verwendete man einen impulsmodulierten GaAlAs-Halbleiterlaser, welcher linear polarisiertes Licht der Wellenlänge $\lambda$ = 830 nm emittierte. Sowohl die Bitlänge, d.h. der Durchmesser der ummagnetisierten "spots", als auch der Bitabstand, d.h. der Abstand von "spot" zu "spot", lagen bei etwa 1 µm.

Für das Lesen der eingeschriebenen Daten über den Kerr-Effekt (Beispiele 1 bis 16) oder über den Faraday-Effekt (Beispiele 17 bis 37) verwendete man den GaAlAs-Halbleiterlaser in Dauerstrich-Betrieb mit einer Lichtleistung von kleiner als 1 mW. Die unkorrigierte Bitfehlerrate wurde in üblicher und bekannter Weise mittels eines Zeitintervallanalysators ("time interval analyzer", TIA) bestimmt.

Die Datenplatten wurden zunächst unmittelbar nach dem Beschreiben gelesen (1. Lesen). Hiernach wurden die Datenplatten dem für magneto-optische Aufzeichnungsmaterialien typischen "beschleunigten Lebensdauertest" bei 60, 70 und 80°C bei einer relativen Luftfeuchtigkeit von 90 % unterworfen und danach erneut gelesen (2. Lesen). Aus den hierbei erhaltenen unkorrigierten Bitfehlerraten und aus der licht- und rasterelektronenmikroskopischen Begutachtung der Aufzeichnungsschichten (B) der Datenplatten wurde deren Lebensdauer unter Normalbedingungen (30°C, 90 % relative Luftfeuchtigkeit) abgeschätzt. Die betreffenden Ergebnisse finden sich in der Tabelle 2.

Vergleichsversuche V1 und V2

11

Herstellung und anwendungstechnische Eigenschaften bekannter Aufzeichnungsmaterialien

Nach der bei den Beispielen 1 bis 37 angegebenen Vorschrift wurden zwei Datenplatten hergestellt, welche in Aufbau und Zusammensetzung den aus der DE-A-33 35 689 bekannten Proben A-2 und B-5 glichen. Der Aufbau der Vergleichsplatten wird in der Tabelle 1 dem Aufbau der erfindungsgemäßen Datenplatten gegenübergestellt.

Die bekannten Datenplatten wurden, wie bei den Beispielen 1 bis 37 angegeben, magnetisiert, mit Daten beschrieben, gelesen und getestet. Die dabei erhaltenen Versuchsergebnisse werden in der Tabelle 2 mit den Werten aus den Beispielen 1 bis 37 verglichen.

Der Vergleich zeigt, daß die Aufzeichnungsmaterialien bekannter Zusammensetzung den erfindungsgemäßen Aufzeichnungsmaterialien hinsichtlich der Lagerstabilität unterlegen waren, was sich an den deutlich erhöhten Bitfehlerraten der bekannten Aufzeichnungsmaterialien V 1 und V 2 bemerkbar machte.

Tabelle 1 Aufbau und Zusammensetzung erfindungsgemäßer und nicht erfindungsgemäßer magneto-optischer Datenplatten

| Bei- spiel Nr. | erste neue Schicht (C) | | Aufzeich- nungs- schicht(B) | zweite neue Schicht (C) | | Reflek- tions- schicht | Antikorrosions- schicht oder dritte neue Schicht (C) | |
|---|---|---|---|---|---|---|---|---|
| | Elementzusammen- setzung I und Morphologie | Atomverhält- nis O:N:C und Dicke (nm) | (nm) | Elementzusammen- setzung I und Morphologie | Atomverhält- nis O:N:C und Dicke (nm) | (nm) | Elementzusammen- setzung I und Morphologie | Atomverhält- nis O:N:C und Dicke (nm) |
| 1 | I-1a röntgenamorph 2-lagig | 1:2:0 (75) | TbDyFe (80) | I-1a röntgenamorph 1-lagig | 1:2,5:0 (50) | - | - | - |
| 2 | I-2a polykristallin 3-lagig | 1:3:0,1 (80) | TbDyFe (90) | I-2a polykristallin 4-lagig | 1:1:0 (70) | - | - | - |
| 3 | I-3a polykristallin 1-lagig | 1:20:0 (75) | TbDyFe (85) | I-3a röntgenamorph 1-lagig | 1:1:100 (45) | - | - | - |
| 4 | I-4a röntgenamorph 1-lagig | 15:1:0 (70) | TbDyFe (80) | I-4a röntgenamorph 2-lagig | 1:3:0 (80) | - | - | - |
| 5 | I-5a polykristallin 4-lagig | 1:1:0 (75) | TbDyFe (80) | I-5a röntgenamorph 1-lagig | 1:200:0 (70) | - | - | - |

EP 0 326 932 A2

Tabelle 1 (Fortsetzung)

| Bei-spiel Nr. | erste neue Schicht (C) | | Aufzeich-nungs-schicht(B) | zweite neue Schicht (C) | | Reflekt-ions-schicht | Antikorrosions-schicht oder dritte neue Schicht (C) | |
|---|---|---|---|---|---|---|---|---|
| | Elementzusammen-setzung I und Morphologie | Atomverhält-nis O:N:C und Dicke (nm) | (nm) | Elementzusammen-setzung I und Morphologie | Atomverhält-nis O:N:C und Dicke (nm) | (nm) | Elementzusammen-setzung I und Morphologie | Atomverhält-nis O:N:C und Dicke (nm) |
| 6 | I-6a polykristallin 1-lagig | 100:1:0 (70) | TbDyFe (80) | I-6a röntgenamorph 1-lagig | 150:1:0,1 (60) | - | - | - |
| 7 | I-7a polykristallin 4-lagig | 1:1:0,5 (80) | TbDyFe (80) | I-5a röntgenamorph 1-lagig | 150:1:0,1 (60) | - | - | - |
| 8 | I-8a röntgenamorph 1-lagig | 100:1:0 (70) | TbDyFe (90) | I-8a röntgenamorph 2-lagig | 1:1:0 (70) | - | - | - |
| 9 | I-9a polykristallin 1-lagig | nur O (75) | TbDyFe (80) | I-9a polykristallin 1-lagig | nur N (40) | - | - | - |
| 10 | I-10a polykristallin 1-lagig | 1:10:0 (70) | TbDyFe (75) | I-10a röntgenamorph 1-lagig | nur N (50) | - | - | - |

EP 0 326 932 A2

Tabelle 1 (Fortsetzung)

| Bei-spiel Nr. | erste neue Schicht (C) | | Aufzeich-nungs-schicht(B) | zweite neue Schicht (C) | | Reflekt-ions-schicht | Antikorrosions-schicht oder dritte neue Schicht (C) | |
|---|---|---|---|---|---|---|---|---|
| | Elementzusammen-setzung I und Morphologie | Atomverhält-nis O:N:C und Dicke (nm) | (nm) | Elementzusammen-setzung I und Morphologie | Atomverhält-nis O:N:C und Dicke (nm) | (nm) | Elementzusammen-setzung I und Morphologie | Atomverhält-nis O:N:C und Dicke (nm) |
| 11 | I-11a polykristallin 4-lagig | 200:1:0,1 (80) | TbDyFe (90) | I-11a röntgenamorph 1-lagig | nur N (60) | - | - | - |
| 12 | I-12a röntgenamorph 4-lagig | 1:2:0 (80) | TbDyFe (90) | I-12a röntgenamorph 1-lagig | 1:1000:1 (60) | - | - | - |
| 13 | I-13a polykristallin 1-lagig | nur O (75) | TbDyFe (70) | I-13a polykristallin 1-lagig | nur N (45) | - | - | - |
| 14 | I-14a röntgenamorph 1-lagig | 1:1:0 (75) | TbDyFe (80) | I-14a röntgenamorph 1-lagig | nur N (40) | - | - | - |
| 15 | I-15a röntgenamorph 1-lagig | nur O (75) | TbDyFe (90) | I-15a röntgenamorph 2-lagig | 10:1:0 (80) | - | - | - |

EP 0 326 932 A2

Tabelle 1 (Fortsetzung)

| Bei-spiel Nr. | erste neue Schicht (C) | | Aufzeich-nungs-schicht(B) | zweite neue Schicht (C) | | Reflekt-ions-schicht | Antikorrosions-schicht oder dritte neue Schicht (C) | |
|---|---|---|---|---|---|---|---|---|
| | Elementzusammen-setzung I und Morphologie | Atomverhält-nis O:N:C und Dicke (nm) | (nm) | Elementzusammen-setzung I und Morphologie | Atomverhält-nis O:N:C und Dicke (nm) | (nm) | Elementzusammen-setzung I und Morphologie | Atomverhält-nis O:N:C und Dicke (nm) |
| 16 | I-16a röntgenamorph 2-lagig | 1:3:0,1 (70) | TbDyFe (80) | I-16a röntgenamorph 1-lagig | 1:1:100 (75) | - | - | - |
| 17 | I-17a röntgenamorph 1-lagig | 100:1:0,2 (80) | TbDyFe (20) | I-16a röntgenamorph 1-lagig | nur O (100) | Al (500) | I-17a röntgenamorph 1-lagig | nur N (40) |
| 18 | I-18a polykristallin 1-lagig | 100:1:0 (80) | TbDyFe (25) | I-18a röntgenamorph 1-lagig | 100:1:0 (150) | Al (300) | I-18a röntgenamorph 1-lagig | nur N (50) |
| 19 | I-19a polykristallin 5-lagig | 1:1:0 (70) | TbDyFe (23) | I-19a röntgenamorph 1-lagig | nur O (100) | Al (350) | I-17a röntgenamorph 4-lagig | 1:2:0 (40) |
| 20 | I-20a polykristallin 1-lagig | nur O (80) | TbDyFe (30) | I-20a röntgenamorph 1-lagig | nur O (150) | Al (500) | I-20a polykristallin 5-lagig | 1:1:0 (60) |

EP 0 326 932 A2

Tabelle 1 (Fortsetzung)

| Bei-spiel Nr. | erste neue Schicht (C) | | Aufzeich-nungs-schicht(B) | zweite neue Schicht (C) | | Reflekt-ions-schicht | Antikorrosions-schicht oder dritte neue Schicht (C) | |
|---|---|---|---|---|---|---|---|---|
| | Elementzusammen-setzung I und Morphologie | Atomverhält-nis O:N:C und Dicke (nm) | (nm) | Elementzusammen-setzung I und Morphologie | Atomverhält-nis O:N:C und Dicke (nm) | (nm) | Elementzusammen-setzung I und Morphologie | Atomverhält-nis O:N:C und Dicke (nm) |
| 21 | I-21a polykristallin 1-lagig | nur O (70) | TbDyFe (22) | I-21a polykristallin 1-lagig | nur O (80) | Al (400) | I-21a polykristallin 1-lagig | 200:1:100 (80) |
| 22 | I-22a röntgenamorph 1-lagig | 1000:1:0 (75) | TbDyFe (20) | I-22a röntgenamorph 1-lagig | nur O (80) | Al (300) | I-22a polykristallin 3-lagig | 1:2:300 (40) |
| 23 | I-23a röntgenamorph 1-lagig | 1:1:0 (70) | TbDyFe (20) | I-23a röntgenamorph 1-lagig | 1:1 (95) | Al (300) | I-23a röntgenamorph 2-lagig | 1:1:0 (40) |
| 24 | I-24a polykristallin 1-lagig | 100:1:0 (80) | TbDyFe (25) | I-24a polykristallin 2-lagig | 3:1:0 (100) | Al (450) | I-24a polykristallin 1-lagig | nur C (60) |
| 25 | I-25a polykristallin 2-lagig | 50:1:0,1 (70) | TbDyFe (25) | I-25a polykristallin 1-lagig | 100:1:0 (100) | Al (300) | I-25a polykristallin 1-lagig | 1:100:0 (50) |

EP 0 326 932 A2

Tabelle 1 (Fortsetzung)

| Bei-spiel Nr. | erste neue Schicht (C) Elementzusammen-setzung I und Morphologie | Atomverhält-nis O:N:C und Dicke (nm) | Aufzeich-nungs-schicht(B) (nm) | zweite neue Schicht (C) Elementzusammen-setzung I und Morphologie | Atomverhält-nis O:N:C und Dicke (nm) | Reflekt-ions-schicht (nm) | Antikorrosions-schicht oder dritte neue Schicht (C) Elementzusammen-setzung I und Morphologie | Atomverhält-nis O:N:C und Dicke (nm) |
|---|---|---|---|---|---|---|---|---|
| 26 | I-26a röntgenamorph 1-lagig | nur O (100) | TbDyFe (20) | I-26a polykristallin 1-lagig | nur O (90) | Al (300) | I-26a röntgenamorph 1-lagig | nur N (55) |
| 27 | I-27a röntgenamorph 2-lagig | 1:2:0 (70) | TbDyFe (27) | I-27a röntgenamorph 1-lagig | 1:1000 (100) | Al (350) | I-27a röntgenamorph 1-lagig | 1:1:1000 (40) |
| 28 | I-28a röntgenamorph 1-lagig | 100:1:0 (90) | TbDyFe (20) | I-28a polykristallin 1-lagig | 1:1 (90) | Al (400) | I-28a polykristallin 1-lagig | nur C (60) |
| 29 | I-29a röntgenamorph 1-lagig | 1:10:0 (100) | TbDyFe (21) | I-29a polykristallin 1-lagig | 1:1 (80) | Al (300) | I-29a polykristallin 4-lagig | 1:1:0 (70) |
| 30 | I-30a röntgenamorph 1-lagig | 1:20:0 (90) | TbDyFe (25) | I-30a röntgenamorph 1-lagig | 1:25 (100) | Al (500) | I-30a röntgenamorph 1-lagig | nur N (40) |

EP 0 326 932 A2

Tabelle 1 (Fortsetzung)

| Bei-spiel Nr. | erste neue Schicht (C) | | Aufzeich-nungs-schicht(B) | zweite neue Schicht (C) | | Reflekt-ions-schicht | Antikorrosions-schicht oder dritte neue Schicht (C) | |
|---|---|---|---|---|---|---|---|---|
| | Elementzusammen-setzung I und Morphologie | Atomverhält-nis O:N:C und Dicke (nm) | (nm) | Elementzusammen-setzung I und Morphologie | Atomverhält-nis O:N:C und Dicke (nm) | (nm) | Elementzusammen-setzung I und Morphologie | Atomverhält-nis O:N:C und Dicke (nm) |
| 31 | I-31a röntgenamorph 1-lagig | 1:1:0 (110) | TbDyFe (20) | I-31a polykristallin 1-lagig | 1:20:0 (100) | Al (350) | I-31a röntgenamorph 1-lagig | nur N (50) |
| 32 | I-32a röntgenamorph 1-lagig | nur O (105) | TbDyFe (20) | I-32a polykristallin 1-lagig | nur O (100) | Al (400) | I-32a amorph 1-lagig | nur O (70) |
| 33 | I-33a röntgenamorph 2-lagig | 10:1:0,1 (90) | TbDyFe (22) | I-33a röntgenamorph 3-lagig | 10:1:0 (100) | Al (350) | I-33a amorph 3-lagig | 10:1:0 (80) |
| 34 | I-34a röntgenamorph 1-lagig | nur O (100) | TbDyFe (21) | I-34a polykristallin 1-lagig | nur O (105) | Al (400) | I-34a amorph 3-lagig | 1:1:1000 (60) |
| 35 | I-35a röntgenamorph 1-lagig | 100:1:0 (90) | TbDyFe (20) | I-35a röntgenamoph 1-lagig | nur O (100) | Al (500) | I-35a amorph 2-lagig | 1:1:0 (65) |

EP 0 326 932 A2

Tabelle 1 (Fortsetzung)

| Bei-spiel Nr. | erste neue Schicht (C) | | Aufzeich-nungs-schicht(B) | zweite neue Schicht (C) | | Reflekt-ions-schicht | Antikorrosions-schicht oder dritte neue Schicht (C) | |
|---|---|---|---|---|---|---|---|---|
| | Elementzusammen-setzung I und Morphologie | Atomverhält-nis O:N:C und Dicke (nm) | (nm) | Elementzusammen-setzung I und Morphologie | Atomverhält-nis O:N:C und Dicke (nm) | (nm) | Elementzusammen-setzung I und Morphologie | Atomverhält-nis O:N:C und Dicke (nm) |
| 36 | I-36a röntgenamorph 1-lagig | nur O (90) | TbDyFe (20) | I-36a röntgenamorph 1-lagig | nur O (105) | Al (350) | I-36a amorph 2-lagig | 1:1 (50) |
| 37 | I-37a röntgenamorph 1-lagig | 100:1:0 (90) | TbDyFe (19) | I-37a röntgenamorph 1-lagig | 100:1:0 (100) | Al (400) | I-37a amorph 3-lagig | 1:1:2 (45) |
| Ver-gleichs-versuch | | | | | | | | |
| V1 | polykristallin | SiO (80) | TbDyFe (60) | polykristallin | TiO$_2$ (200) | - | polykristallin | Al$_2$O$_3$ (300) |
| V2 | polykristallin | SiO (80) | TbDyFe (25) | polykristallin | CeO$_2$ (100) | Al (500) | polykristallin | CrN (300) |

EP 0 326 932 A2

Tabelle 2

| Beispiel | Versuchsergebnisse | | Lebensdauer (Jahre) |
|---|---|---|---|
| | Bitfehlerrate (unkorrigiert) | | |
| | 1. Lesen | 2. Lesen | |
| 1 | $< 10^{-5}$ | $< 10^{-5}$ | $> 15$ |
| 2 | $< 10^{-5}$ | $< 10^{-5}$ | $> 15$ |
| 3 | $< 10^{-5}$ | $< 10^{-5}$ | $> 15$ |
| 4 | $< 10^{-5}$ | $10^{-5}$ | $\sim 15$ |
| 5 | $< 10^{-5}$ | $< 10^{-5}$ | $> 15$ |
| 6 | $10^{-5}$ | $10^{-5}$ | $\sim 15$ |
| 7 | $< 10^{-5}$ | $10^{-5}$ | $\sim 15$ |
| 8 | $10^{-5}$ | $10^{-5}$ | $\sim 15$ |
| 9 | $< 10^{-5}$ | $< 10^{-5}$ | $> 15$ |
| 10 | $< 10^{-5}$ | $< 10^{-5}$ | $> 15$ |
| 11 | $< 10^{-5}$ | $10^{-5}$ | $> 15$ |
| 12 | $< 10^{-5}$ | $< 10^{-5}$ | $> 15$ |
| 13 | $10^{-5}$ | $10^{-5}$ | $\sim 15$ |
| 14 | $< 10^{-5}$ | $< 10^{-5}$ | $> 15$ |
| 15 | $< 10^{-5}$ | $10^{-5}$ | $> 15$ |
| 16 | $10^{-5}$ | $10^{-5}$ | $> 15$ |
| 17 | $10^{-5}$ | $10^{-5}$ | $> 15$ |
| 18 | $< 10^{-5}$ | $< 10^{-5}$ | $> 15$ |
| 19 | $10^{-5}$ | $10^{-5}$ | $> 15$ |
| 20 | $< 10^{-5}$ | $10^{-5}$ | $\sim 15$ |
| 21 | $< 10^{-5}$ | $< 10^{-5}$ | $> 15$ |
| 22 | $< 10^{-5}$ | $10^{-5}$ | $\sim 15$ |
| 23 | $< 10^{-5}$ | $< 10^{-5}$ | $> 15$ |
| 24 | $10^{-5}$ | $10^{-5}$ | $> 15$ |
| 25 | $10^{-5}$ | $10^{-5}$ | $> 15$ |
| 26 | $< 10^{-5}$ | $< 10^{-5}$ | $> 15$ |
| 27 | $< 10^{-5}$ | $10^{-5}$ | $\sim 15$ |
| 28 | $< 10^{-5}$ | $< 10^{-5}$ | $> 15$ |
| 29 | $< 10^{-5}$ | $< 10^{-5}$ | $> 15$ |
| 30 | $< 10^{-5}$ | $< 10^{-5}$ | $> 15$ |
| 31 | $< 10^{-5}$ | $< 10^{-5}$ | $> 15$ |
| 32 | $< 10^{-5}$ | $< 10^{-5}$ | $> 15$ |
| 33 | $< 10^{-5}$ | $10^{-5}$ | $\sim 15$ |
| 34 | $< 10^{-5}$ | $< 10^{-5}$ | $> 15$ |
| 35 | $< 10^{-5}$ | $< 10^{-5}$ | $> 15$ |
| 36 | $< 10^{-5}$ | $10^{-5}$ | $\sim 15$ |
| 37 | $< 10^{-5}$ | $< 10^{-5}$ | $> 15$ |
| Vgl.-Vers | | | |
| V1 | $10^{-5}$ | $2 \cdot 10^{-4}$ | 10 - 11 |
| V2 | $10^{-5}$ | $6 \cdot 10^{-4}$ | 10 - 11 |

## Ansprüche

1. Flächenförmiges, mehrschichtiges magneto-optisches Aufzeichnungsmaterial mit
(A) einem optisch transparenten dimensionsstabilen Träger,
(B) einer thermisch veränderbaren Aufzeichnungsschicht aus einer amorphen Lanthanid-Übergangsmetall-Legierung und - zumindest auf der dem Träger (A) abgewandten Seite der Aufzeichnungsschicht (B) - mit
(C) einer polykristallinen oder röntgenamorphen Schicht aus der Carbid-, Oxid- und/oder Nitridkeramik, welche von der Elementzusammensetzung I

$$(Al_xSi_{1-x})_{1-z}(M_r^1M_s^2M_t^3)_z \qquad I$$

gebildet wird, worin die Indices und die Variablen die folgende Bedeutung haben:

$M^1$, $M^2$ und $M^3$    Ti, Zr, Hf, Th, Sc, Y, La, Ce, Pr, Nd, Sm, Eu, Gd, Tb, Dy, Ho, Er, Tm, Yb, Lu, V, Nb, Ta, Cr, Mo, W, Mn, Re, Fe, Co, Rh, Cu, Zn, Mg, Ca, Sr, Ba, B, Ga, In, Tl, Ge, Sn, Pb, P, As, Sb und Te, mit den Maßgaben, daß $M^1$, $M^2$ und $M^3$ voneinander verschieden sind, oder daß sie gleich oder verschieden voneinander sind, wenn es sich bei $M^1$, $M^2$ und $M^3$ um Lanthan oder ein Lanthanid handelt;

$x$    0 bis 1;

$z$    $r + s + t$;

$r$    0,005 bis 0,15;

$s$    0,005 bis 0,15;

$t$    0 bis 0,005.

2. Verfahren zur Herstellung eines flächenförmigen, mehrschichtigen magneto-optischen Aufzeichnungsmaterials mit
(A) einem optisch transparenten dimensionsstabilen Träger,
(B) einer thermisch veränderbaren Aufzeichnungsschicht aus einer amorphen Lanthanid-Übergangsmetall-Legierung und - zumindest auf der dem Träger (A) abgewandten Seite der Aufzeichnungsschicht (B) - mit
(C) einer Carbide, Oxide und/oder Nitride von Aluminium und/oder Silicium enthaltenden Antikorrosionsschicht,
bei welchem man die einzelnen Schichten (B) und (C) auf dem Träger (A) in der gewünschten Reihenfolge, Anzahl und Dicke und mit dem jeweils gewünschten inneren Aufbau über die Gasphase aufbringt, wonach man in der Aufzeichnungsschicht (B) eine definierte, senkrecht zu ihrer Oberfläche orientierte Magnetisierung induziert, dadurch gekennzeichnet, daß man hierbei die Schicht (C) durch reaktive Kathodenzerstäubung ("reactive sputtering") einer Kathode ("target") der Elementzusammensetzung I,

$$(Al_xSi_{1-x})_{1-z}(M_r^1M_s^2M_t^3)_z \qquad I$$

worin die Indices und die Variablen die folgende Bedeutung haben:

$M^1$, $M^2$ und $M^3$    Ti, Zr, Hf, Th, Sc, Y, La, Ce, Pr, Nd, Sm, Eu, Gd, Tb, Dy, Ho, Er, Tm, Yb, Lu, V, Nb, Ta, Cr, Mo, W, Mn, Re, Fe, Co, Rh, Cu, Zn, Mg, Ca, Sr, Ba, B, Ga, In, Tl, Ge, Sn, Pb, P, As, Sb und Te, mit den Maßgaben, daß $M^1$, $M^2$ und $M^3$ voneinander verschieden sind, oder daß sie gleich oder verschieden voneinander sind, wenn es sich bei $M^1$, $M^2$ und $M^3$ um Lanthan oder ein Lanthanid handelt; handelt;

$x$    0 bis 1;

$z$    $r + s + t$;

$r$    0,005 bis 0,15;

$s$    0,005 bis 0,15;

$t$    0 bis 0,005;

in der Gegenwart von Kohlenstoff, Sauerstoff und/oder Stickstoff herstellt.

3. Verfahren zur Herstellung eines flächenförmigen, mehrschichtigen magneto-optischen Aufzeichnungsmaterials nach Anspruch 2, dadurch gekennzeichnet, daß man hierbei die Schicht (C) durch reaktive Kathodenzerstäubung ("reactive sputtering") des "targets" der Elementzusammensetzung I in der Gegenwart von Kohlenstoff, Sauerstoff und/oder Stickstoff sowie von Helium, Neon, Argon, Krypton und/oder Xenon herstellt.

4. Verfahren zur Herstellung eines flächenförmigen, mehrschichtigen magneto-optischen Aufzeichnungsmaterials nach Anspruch 2 oder 3, dadurch gekennzeichnet, daß man hierbei die Schicht (C) durch reaktive Magnetronkathodenzerstäubung ("reactive magnetron sputtering") herstellt.

5. Verwendung des flächenförmigen, mehrschichtigen magneto-optischen Aufzeichnungsmaterials gemäß Anspruch 1 für das reversible laseroptische Schreiben und Lesen von Daten.

6. Verwendung des gemäß einem der Ansprüche 2 bis 4 hergestellten, flächenförmigen, mehrschichtigen magneto-optischen Aufzeichnungsmaterials für das reversible laseroptische Schreiben und Lesen von Daten.

7. Verfahren zum reversiblen laseroptischen Schreiben und Lesen von Daten, bei dem man die Daten

(a) mittels eines Schreiblaserstrahls in die thermisch veränderbare Aufzeichnungsschicht (B) eines flächenförmigen, mehrschichtigen magneto-optischen Aufzeichnungsmaterials in der Form ummagnetisierter Bereiche einschreibt, wonach man die eingeschriebenen Daten

(b) mittels eines Leselaserstrahls unter Ausnutzung des magneto-optischen Kerr- oder Faraday-Effektes liest und sie ggf. nach dem Lesen

(c) durch lokales Erwärmen der Aufzeichnungsschicht (B) ggf. bei gleichzeitiger Einwirkung eines Magentfeldes wieder löscht, wonach man ggf.

(d) neue Daten einschreibt,

dadurch gekennzeichnet, daß man hierfür ein Aufzeichnungsmaterial gemäß Anspruch 1 oder ein Aufzeichnungsmaterial verwendet, welches man gemäß einem der Ansprüche 2 bis 4 hergestellt hat.

8. Verfahren zum reversiblen laseroptischen Schreiben und Lesen von Daten nach Anspruch 7, dadurch gekennzeichnet, daß man hierfür ein Aufzeichnungsmaterial gemäß Anspruch 1 verwendet, welches man gemäß einem der Ansprüche 2 bis 4 hergestellt hat.